# EUROPÄISCHE PATENTSCHRIFT

(11) **EP 0 464 319 B1**
(45) Veröffentlichungstag und Bekanntmachung des Hinweises auf die Patenterteilung: **26.01.1994**
(21) Anmeldenummer: 91105528.3
(22) Anmeldetag: 08.04.1991
(51) Int. Cl.: B60C 27/14

(54) **Vorrichtung zum Befestigen einer Gleitschutzvorrichtung an einer Kraftfahrzeugfelge**
Attachment device for mounting an antislip device on an automotive vehicle's rim
Dispositif de fixation d'un dispositif antidérapant sur une jante de véhicule automobile

(30) Priorität: 23.06.1990 DE 4020050
(43) Veröffentlichungstag der Anmeldung: 08.01.1992
(73) Patentinhaber: Confon AG, CH-9424 Rheineck (CH)
(72) Erfinder: Ippen, Heiko, W-4150 Krefeld (DE)
(74) Vertreter: Cohausz & Florack Patentanwälte

(56) Entgegenhaltungen:
- EP-A- 0 397 067
- DE-U- 8 530 606
- US-A- 3 470 932
- US-A- 3 935 891

## Beschreibung

Die Erfindung betrifft eine Vorrichtung zum lösbaren Befestigen einer Gleitschutzvorichtung an der Felge eines Kraftfahrzeugrades mit einer an der Felgenaußenseite koaxial anschraubbaren Basisscheibe, die eine mittlere Öffnung aufweist und mit einem an der Außenseite der Basisscheibe durch einen im Bereich der Öffnung angeordneten Schnellverschluß koaxial befestigbaren, insbesondere scheibenförmigen, Lagerteil, der mit der Basisscheibe einen Ringspalt bildet, in dem der innere Rand einer Tragscheibe drehbeweglich gelagert einliegt, an der außen sich radial erstreckende Arme befestigt sind, die den Gleitschutz tragen.

Es ist aus dem deutschen Gebrauchsmuster 85 30 606 und aus US-A- 3 470 932 bekannt, eine Basisscheibe (Nabe) an einer Kraftfahrzeugfelge seitlich anzuschrauben und hierbei die Schrauben bzw. Muttern zu nutzen mit denen die Felge an der Achse des Kraftfahrzeuges angeschraubt wird. Da die Felgen mit sehr unterschiedlichen Befestigungslöchern versehen sind, d.h. Anzahl und damit Teilung als auch der Radius des Lochkreises sind von Kraftfahrzeug zu Kraftfahrzeug unterschiedlich, muß für fast jeden Kraftfahrzeugtyp eine unterschiedliche Basisscheibe auf Lager gehalten werden.

Es ist auch bekannt, zwischen der Basisscheibe und der Kraftfahrzeugfelge eine Adapterscheibe vorzusehen, die viele Öffnungen mit unterschiedlichsten Teilungen und Abmessungen aufweist, so daß sie an die verschiedensten Felgen befestigbar ist, so daß die Anzahl verschiedener Basisscheiben wesentlich verringert wird. Während des Winters bleibt die Basisscheibe an der Felge befestigt, so daß die Gleitschutzvorrichtung sehr schnell montierbar ist. Da aber die bekannten Basisscheiben an der Felge erheblich vorstehen, sind sie sehr auffällig.

Schließlich wird in der vorangemeldeten, nachveröffentlichten europäischen Anmeldung 0 397 067 eine Basisscheibe aus Kunststoff beschrieben, deren mittlere Öffnung einen mittigen Vorsprung des Lagerteils formschlüssig aufnimmt und durch ein Rastteil gesichert ist. Diese Basisscheibe verbleibt während des Winters auch an der Felge und ist wegen ihrer Bauhöhe verhältnismäßig auffällig.

Aufgabe der Erfindung ist es, eine Vorrichtung der Eingangs genannten Art so zu verbessern, daß sie an den unterschiedlichsten Felgen befestigbar ist und eine geringe Bauhöhe aufweist.

Diese Aufgabe wird erfindungsgemäß dadurch gelöst, daß die Basisscheibe als flache Scheibe ausgebildet ist, deren mittlere Öffnung einen mittigen Vorsprung des Lagerteils aufnimmt, der in oder an der Öffnung formschlüssig lösbar gehalten ist und in der befestigten Stellung durch ein die lösbare Verbindung blockierendes Rastteil gesichert ist, daß der Rand der Öffnung nach außen zu einem zylindrischen und/oder konischen Rand aufgebogen ist, an dem radiale Vorsprünge insbesondere Klauen oder Zähne vorstehen, die von Vorsprüngen insbesondere Klauen oder Zähnen des mittigen Vorsprungs des Lagerteils untergriffen werden und daß der äußere Rand der Basisscheibe insbesondere zu einem zur Außenseite hin vorstehenden Ringwulst aufgebogen ist und zwischen mittlerer Öffnung und Rand ein tieferliegender Ringbereich besteht, der die Schraubenköpfe oder Muttern aufnimmt.

Eine solche flache Scheibe insbesondere aus Metall steht aufgrund ihrer geringen Bauhöhe nur wenig an der Felge vor, so daß bei nicht montierter Gleitschutzvorrichtung die Basisscheibe wenig auffällig ist. Darüberhinaus kann eine solche Basisscheibe gleichzeitig als Adapterscheibe dienen, d.h. sie kann die unterschiedlichsten Öffnungen für die verschiedensten Felgen besitzen, so daß es nicht mehr erforderlich ist, eine größere Anzahl verschiedener Basisscheiben zu produzieren.

Die erfindungsgemäße Vorrichtung ist konstruktiv besonders einfach, leicht herstellbar und äußerst stabil. Auch ist von größtem Vorteil, daß sie sich leicht ohne Werkzeuge montieren und demontieren läßt und einen sicheren Halt besitzt.

Besonders vorteilhaft ist es hierbei, wenn der Vorsprung des Lagerteils in der Öffnung der Basisscheibe durch eine Renkverbindung gehalten ist.

Ferner wird vorgeschlagen, daß der mittige Vorsprung des Lagerteils hohlzylindrisch ist.

Ein sicherer Halt bei einfacher Montage wird dann erreicht, wenn der mittige Vorsprung das Rastteil aufweist, das in der befestigten Stellung des Lagerteils an der Basischeibe formschlüssig in mindesens einer entsprechenden Ausnehmung der Basisscheibe einliegt. Hierbei können die Ausnehmung(en) der Basisscheibe von den Zwischenräumen zwischen den Vorsprüngen insbesondere zwischen den Klauen oder Zähnen gebildet sein.

Besonders vorteilhaft ist, wenn das Rastteil ein in dem Lagerteil mittig und koaxial gefühter Schieber ist, dessen der Basisscheibe zugewandte Ende formschlüssig in zwei Ausnehmungen der Basisscheibe einliegt und dessen abgewandtes Ende einen Griffbereich bildet. Hierbei sollte daß Rastteil zur Basisscheibe hin federbelastet sein.

Zur Funktion als Adapterscheibe wird vorgeschlagen, daß die Basisscheibe zahlreiche Öffnungen für die verschieden angeordneten Schrauben oder Schraubbolzen der Felgen verschiedener Autotypen besitzt. Hierbei können die Öffnungen der Basisscheibe von radial angeordneten Schlitzen gebildet sein. Auch wird hierzu vorgeschlagen, daß die Schlitze 90 Grad und 72 Grad Teilungen bilden.

Eine besonders geringe BAuhöhe bei hoher Stabilität wird erreicht, wenn die runde Basisscheibe aus Stahlblech besteht. Hierbei kann die Basisscheibe formgestanzt sein.

Ein Ausführungsbeispiel der Erfindung ist in den Zeichnungen dargestellt und wird im folgenden näher beschrieben. Es zeigen:
- Fig. 1: einen axialen Schnitt durch die Vorrichtung bei abgenommener Gleitschutzvorrichtung und eingerastetem Rastteil
- Fig. 2: einen Schnitt nach Fig. 1 mit angehobenem Rastteil
- Fig. 3: im oberen Bereich einen axialen Schnitt rechtwinkelig zum Schnitt nach den Fig. 1 und 2 und im unteren Bereich eine Seitenansicht mit angehobenen Rastteil und
- Fig. 4: eine Draufsicht der Basisscheibe
- Fig. 5: eine Draufsicht auf das Lagerteil von außen.

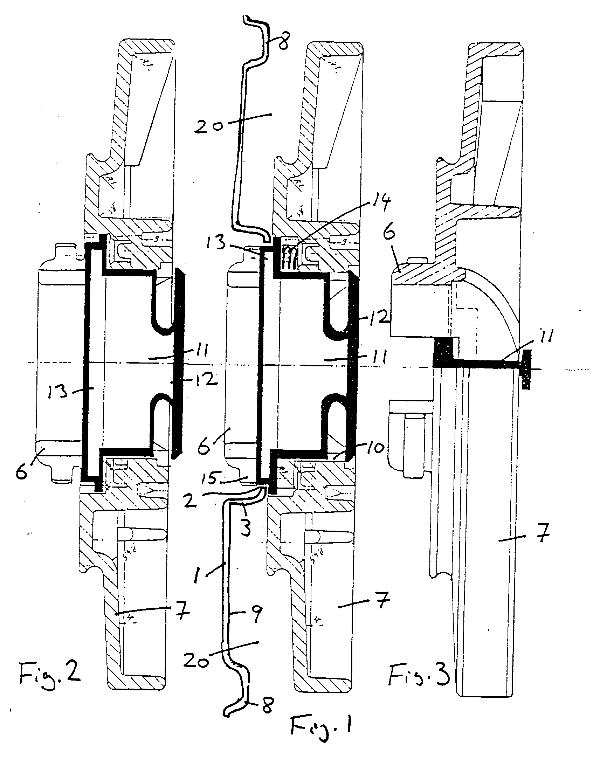

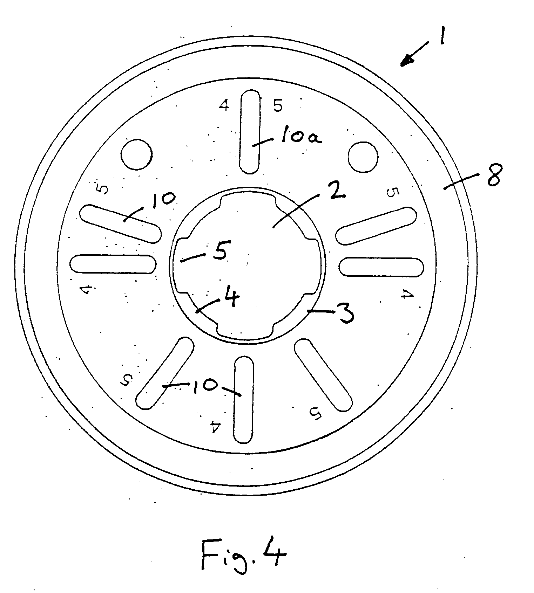

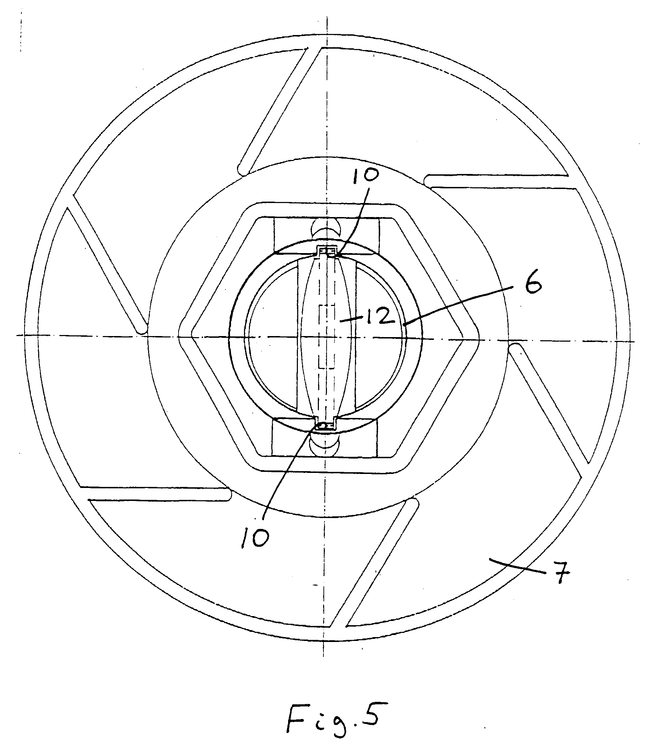

Die an die Felge zu befestigende runde Basisscheibe 1 ist aus Stahlblech formgestanzt und weist eine mittlere Öffnung 2 auf, deren Rand nach außen zu einem zylinderischen und/oder konischen Rand 3 aufgebogen ist, an dem klauen- oder zahnförmige Vorsprünge 4 vorstehen, die in die Öffnung 2 hineinreichen. Die Vorsprünge 4 und die dazwischen liegenden Ausnehmungen 5 bilden einen Teil einer Renkverbindung (Bajonettverbindung), deren zweiter Teil vom mittigen Vorsprung 6 eines Lagerteils 7 gebildet wird.

Der äußere Rand der Basisscheibe 1 ist zu einem Ringwulst 8 geformt, der wie der Rand 3 auch zur Außenseite hin vorsteht, so daß zwischen Rand 3 und Ringwulst 8 ein tiefer liegender Ringbereich 9 besteht, der zahlreiche Öffnungen 10 für Schrauben oder Gewindebolzen der Felgen aufweist und die Schraubenköpfe oder Muttern aufnimmt, so daß sie wenig oder nicht über die Seite der Basisscheibe 1 hinausstehen.

Das aus Kunststoff gespritzte Lagerteil 7 in Form einer Kreisscheibe besitzt ein nur wenig geringeren Durchmesser als die Basisscheibe 1 und weist einen zur Basisscheibe 1 hin gerichteten mittigen Vorsprung 6 auf, der am Lagerteil 7 angeformt ist. Der Vorsprung 6 hat die Form eines Hohlzylinders bzw. einer Buchse, die aufeinander diametral gegenüberliegenden Seiten geschlitzt ist. In diesen zwei achsparallelen Schlitzen 10 ist ein Rastteil 11 geführt, das auf einem Durchmesser des Vorsprungs 6 liegt und auf der der Basisscheibe 1 abgewandten Seite einen Griffbereich 12 besitzt, mit dem das Rastteil 11 entgegen der Kraft von Schraubendruckfedern 13 nach außen gezogen werden kann. Durch dieses Nachaußenziehen wird ein diametraler, einem Balken ähnlicher Rastbereich 13 aus der Öffnung 2 der Basisscheibe herausgezogen. Im eingerastetem Zustand liegen die beiden Enden des Rastbereiches 13 in zwei einander gegenüberliegenden Ausnehmungen 5 der Öffnung 2 zwischen den Öffnungen 4 ein.

An der zylindrischen Außenwandung des Vorsprungs 6 befinden sich Vorsprünge 15 die in Anzahl, Form, Größe und Anordnung den Öffnungen 2 entsprechen, so daß der Vorsprung 6 mit den Vorsprüngen 15 in die Öffnung 2 axial eingeführt und danach verdreht wird, wonach die Vorsprünge 15 die Vorsprünge 4 der Basisscheibe 1 untergreifen. Während dieses Verdrehens liegt der Rastbereich 13 auf den Vorsprüngen 4 außen an und die Vorsprünge 4 drücken das Rastteil 11 gegen die Federn 14 ein. Sobald die äußeren Enden des Rastbereichs 13 die Ausnehmungen 5 erreicht haben, rastet das Teil 11 in die Ausnehmungen 5 ein und das Lagerteil 7 ist drehfest gegenüber der Basisscheibe 1 gehalten. Erst durch anheben des Rastteils 11 über dem Griff 12 kann der Rastbereich 13 aus den Ausnehmungn 5 herausgezogen werden und das Lagerteil 7 wieder verdreht werden, um es von der Basisscheibe 1 zu entfernen.

Ist das Lagerteil 7 an der Basisscheibe 1 befestigt, so besteht zwischen den Teilen 1 und 7 ein Ringspalt 20, in dem ein ringförmiger Bereich einer nicht dargestellten Tragscheibe drehbeweglich und leicht verschieblich gelagert ist. Diese Tragscheibe bildet außen Arme die das Gleitschutzmittel auf der Lauffläche des Reifens halten.

Die Basisscheibe 1 weist zahlreiche Öffnungen 10 auf, für die verschieden angeordneten Schrauben oder Schraubbolzen der Felgen. Die Öffnungen sind schlitzförmig und radial angeordnet damit die Schrauben oder Gewindebolzen auch dann übergriffen werden können, wenn sie in unterschiedlichen Radien bzw. auf Kreisen mit unterschiedlichen Durchmessern angeordnet sind. Die radialen Schlitze 10 bilden miteinander Winkel bzw. Teilungen, wobei vier Schlitze miteinander vier Winkel von 90 Grad bilden und fünf Schlitze fünf Winkel von 72 Grad, wobei ein Schlitz 10a in beiden Teilungsarten Verwendung findet.

Bei abgenommenem Lagerteil 7 wird auf die an der Felge montierte Basisscheibe 1 eine Zierkappe außen befestigt, die auch durch eine Renkverbindung gehalten sein kann, die die Öffnung 2 der Basisscheibe 1 nutzt, d.h. auf der Innenseite der nicht dargestellten Zierscheibe bzw. Zierkappe befindet sich ein Vorsprung mit einzeln außen angeformten radialen Vorsprüngen die in die Ausnehmungen 5 hineinreichen und nach axialem durchstecken die Vorsprünge 4 hintergreifen.

## Patentansprüche

1. Vorrichtung zum lösbaren Befestigen einer Gleitschutzvorrichtung an der Felge eines Kraftfahrzeugrades mit einer an die Felgenaußenseite koaxial anschraubaren Basisscheibe (1), die eine mittlere Öffnung aufweist und mit einem an der Außenseite der Basisscheibe durch einen im Bereich der Öffnung angeordneten Schnellverschluß koaxial befestigbaren, insbesondere scheibenförmigen, Lagerteil (7), der mit der Basisscheibe (1) einen Ringspalt (20) bildet, in dem der innere Rand einer Tragscheibe drehbeweglich gelagert einliegt, an der außen sich radial erstreckende Arme befestigt sind, die den Gleitschutz tragen, **dadurch**
**gekennzeichnet,**
- daß die Basisscheibe (1) als flache Scheibe ausgebildet ist, deren mittlere Öffnung (2) einen mittigen Vorsprung (6) des Lagerteils (7) aufnimmt, der in oder an der Öffnung (2) formschlüssig lösbar gehalten ist und in der befestigten Stellung durch ein die lösbare Verbindung blockierendes Rastteil (11) gesichert ist,
- daß der Rand der Öffnung (2) nach außen zu einem zylindrischen und/oder konischen Rand (3) aufgebogen ist, an dem radiale Vorsprünge (4) insbesondere Klauen oder Zähne vorstehen, die von Vorsprüngen (15) insbesondere Klauen oder Zähnen des mittigen Vorsprungs (6) des Lagerteils (7) untergriffen werden und
- daß der äußere Rand der Basisscheibe (1) insbesondere zu einem zur Außenseite hin vorstehenden Ringwulst (8) aufgebogen ist und zwischen mittlerer Öffnung (2) und Ringwulst (8) ein tieferliegender Ringbereich (9) besteht, der die Schraubenköpfe oder Muttern aufnimmt.

2. Vorrichtung nach Anspruch 1, **dadurch** **gekennzeichnet,** daß der Vorsprung (6) des Lagerteils (7) in oder an der Öffnung (2) der Basisscheibe (1) durch eine Renkverbindung gehalten ist.

3. Vorrichtung nach einem der vorherigen Ansprüche, **dadurch gekennzeichnet,** daß der mittige Vorsprung (6) des Lagerteils (7) hohlzylindrisch ist.

4. Vorrichtung nach einem der vorherigen Ansprüche, **dadurch gekennzeichnet,** daß der mittige Vorsprung (6) das Rastteil (11) aufweist, das in der befestigten Stellung des Lagerteils (7) an der Basisscheibe (1) formschlüssig in mindestens einer entsprechenden Ausnehmung (5) der Basisscheibe (1) einliegt.

5. Vorrichtung nach Anspruch 4, **dadurch gekennzeichnet,** daß die Ausnehmung(en) (5) der Basisscheibe (1) von den Zwischenräumen zwischen den Vorsprüngen (4), insbesondere zwischen den Klauen oder Zähnen, gebildet sind.

6. Vorrichtung nach Anspruch 4 oder 5, **dadurch** **gekennzeichnet,** daß das Rastteil (11) ein in dem Lagerteil (7) mittig und koaxial geführter Schieber ist, dessen der Basisscheibe (1) zugewandtes Ende formschlüssig in zwei Ausnehmungen (5) der Basisscheibe (1) einliegt und dessen abgewandtes Ende einen Griffbereich (12) bildet.

7. Vorrichtung nach einem der Ansprüche 4 bis 6, **dadurch gekennzeichnet,** daß das Rastteil (11) zur Basisscheibe (1) hin federbelastet ist.

8. Vorrichtung nach einer der vorherigen Ansprüche, **dadurch gekennzeichnet,** daß die Basisscheibe (1) zahlreiche Öffnungen (10) für die verschieden angeordneten Schrauben oder Schraubbolzen der Felgen verschiedener Autotypen besitzt.

9. Vorrichtung nach Anspruch 8, **dadurch** **gekennzeichnet,** daß die Öffnungen (10) der Basisscheibe von radial angeordneten Schlitzen gebildet sind.

10. Vorrichtung nach Anspruch 11, **dadurch** **gekennzeichnet,** daß die Schlitze (10) 60, 72, 90 und/oder 120 Grad Teilungen bilden.

11. Vorrichtung nach einem der vorherigen Ansprüche, **dadurch gekennzeichnet,** daß die runde Basisscheibe (1) aus Stahlblech besteht.

12. Vorrichtung nach Anspruch 11, **dadurch** **gekennzeichnet,** daß die Basisscheibe (1) formgestanzt ist.

## Claims

1. A device for the releasable attachment of an anti-skid device to the rim of a motor vehicle wheel, having a base disc (1) which can be screwed coaxially to the outside of the rim and is formed with a central opening, and a more particularly disc-shaped bearing member (7) which can be attached coaxially to the outside of the base disc via a snap closure disposed in the zone of the opening and which cooperates with the base disc (1) to form an annular gap (20) in which the inner edge of a supporting disc is inserted, rotatably mounted, to which outwardly radially extending arms are attached which bear the anti-skid device, characterized in that
- the base disc (1) is constructed in the form of a flat disc whose central opening (2) receives a central projection (6) of the bearing member (7), said projection being positively and releasably retained in or on the opening (2) and being secured in the attached position by a latch member (11) blocking the releasable connection,
- the edge of the opening (2) is bent upwardly and outwardly to form a cylindrical and/or conical edge (3) from which radial projections (4), more particularly dogs or teeth project, beneath which projections (15), more particularly dogs or teeth of the central projection (6) of the bearing member (7) engage, and
- the outer edge of the base disc (1) is bent upwards more particularly to form the annular bead (8) projecting towards the outside, while a deeper-lying annular zone (9) receiving the screw heads or nuts is disposed between the central opening (2) and the annular bead (8).

2. A device according to claim 1, characterized in that the projection (6) of the bearing member (7) is retained by a bayonet-type connection in or on the opening (2) in the base disc (3).

3. A device according to one of the preceding claims, characterized in that the central projection (6) of the bearing member (7) is hollow cylindrical.

4. A device according to one of the preceding claims, characterized in that the central projection (6) has the latch member (11), which in the attached position of the bearing member (7) on the base disc (1) is inserted positively in at least one corresponding recess (5) in the base disc (1).

5. A device according to claim 4, characterized in that the or each recess (5) in the base disc (1) is formed by the intermediate spaces between the projections (4), more particularly between the dogs or teeth.

6. A device according to claims 4 or 5, characterized in that the latch member (11) is a slide which is guided centrally and coaxially in the bearing member (7) and whose end adjacent the base disc (1) is introduced into two recesses (5) in the base disc (1) and whose remote end forms a handle zone (12).

7. A device according to one of claims 4 to 6, characterized in that the latch member (11) is spring-loaded in the direction of the base disc (1).

8. A device according to one of the preceding claims, characterized in that the base disc (1) is formed with numerous openings (10) for the differently disposed screws or screw bolts of the rims of different types of car.

9. A device according to claim 8, characterized in that the openings (10) in the base disc are formed by radially disposed slots.

10. A device according to claim 11, characterized in that the slots (10) form pitches of 60, 72, 90 and/or 120 degrees.

11. A device according to one of the preceding claims, characterized in that the round base disc (1) is made of steel plate.

12. A device according to claim 11, characterized in that the base disc (1) is produced in a forming die.

## Revendications

1. Dispositif pour la fixation démontable d'un dispositif antidérapant à la jante d'une roue de véhicule automobile avec un disque de base (1) pouvant être vissé coaxialement à la face extérieure de la jante, qui présente une ouverture centrale et avec une pièce d'appui (7), en particulier en forme de disque, pouvant être fixée coaxialement à la face extérieure du disque de base au moyen d'une fermeture rapide qui forme avec le disque de base (1) une fente annulaire (20), dans laquelle est logé monté mobile en rotation un disque de support auquel sont fixés des bras s'étendant radialement vers l'extérieur qui portent l'antidérapant, caractérisé en ce
- que le disque de base (1) est réalisé sous forme de disque plat dont l'ouverture centrale (2) reçoit une saillie centrale (6) de la pièce d'appui (7), qui est maintenue démontable à engagement positif dans ou sur l'ouverture (2) et est assurée en position fixée par une pièce d'enclenchement (11) bloquant la liaison démontable,
- que le bord de l'ouverture (2) est recourbé vers l'extérieur en un bord (3) cylindrique et/ou conique par rapport auquel font saillie des saillies radiales (4), en particulier des griffes ou des dents, qui sont saisies par des saillies (15), en particulier des griffes ou des dents, de la saillie centrale (6) de la pièce d'appui (7) et
- que le bord extérieur du disque de base (1) est recourbé, en particulier sous forme d'un bourrelet annulaire (8) en saillie vers la face extérieure, et il existe entre l'ouverture centrale (2) et le bourrelet annulaire (8) une zone annulaire (9) disposée plus profond qui reçoit des têtes de vis ou des écrous.

2. Dispositif selon la revendication 1, caractérisé en ce que la saillie (6) de la pièce d'appui (7) est maintenue dans ou sur l'ouverture (2) du disque de base (1) par une liaison à baïonnette.

3. Dispositif selon l'une des revendications précédentes, caractérisé en ce que la saillie centrale (6) de la pièce d'appui (7) est cylindrique creuse.

4. Dispositif selon l'une des revendications précédentes, caractérisé en ce que la saillie centrale (6) présente la pièce d'enclenchement (11) qui est logée, en position fixée de la pièce d'appui (7) sur le disque de base (1), à engagement positif dans au moins un évidement (5) correspondant du disque de base (1).

5. Dispositif selon la revendication 4, caractérisé en ce que l'(les) évidement(s) (5) du disque de base (1) sont formés par les volumes intermédiaires entre les saillies (4), en particulier entre les griffes ou les dents.

6. Dispositif selon la revendication 4 ou 5, caractérisé en ce que la pièce d'enclenchement (11) est un coulisseau guidé centralement et coaxialement dans la pièce d'appui (7), dont l'extrémité tournée vers le disque de base (1) est logée à engagement positif dans deux évidements (5) du disque de base (1) et dont l'extrémité écartée forme une zone de maniement.

7. Dispositif selon l'une des revendications 4 à 6, caractérisé en ce que la pièce d'enclenchement (11) est chargée par ressort en direction du disque de base (1).

8. Dispositif selon l'une des revendications précédentes, caractérisé en ce que le disque de base (1) possède de nombreuses ouvertures (10) pour des vis ou des boulons filetés, disposés diversement, des jantes de types différents d'automobiles.

9. Dispositif selon la revendication 8, caractérisé en ce que les ouvertures (10) du disque de base sont formées par des fentes disposées radialement.

10. Dispositif selon la revendication 9, caractérisé en ce que les fentes (10) forment des divisions à 60, 72, 90 et/ou 120 degrés.

11. Dispositif selon l'une des revendications précédentes, caractérisé en ce que le disque de base (1) rond est constitué de tôle d'acier.

12. Dispositif selon la revendication 11, caractérisé en ce que le disque de base (11) est nervuré à la presse.
